# EUROPEAN PATENT SPECIFICATION

(11) **EP 1 793 537 B1**
(45) Date of publication and mention of the grant of the patent: **25.03.2009**
(21) Application number: 05292573.2
(22) Date of filing: 02.12.2005
(51) Int. Cl.: H04L 12/56

(54) **Network node with modular multistage packet classification**
Netzknoten mit modularer, mehrstufiger Paketklassifizierung
Noeud de réseau avec classification modulaire à plusieurs étages de paquets

(43) Date of publication of application: 06.06.2007
(73) Proprietor: Alcatel Lucent, 75008 Paris (FR)
(72) Inventor: Gilon, Edit Béatrice Louise, 1030 Brussels (BE); Six, Erwin Alfons Constant, 9270 Kalken (BE); Verzijp, Nico Victor, 2018 Antwerp (BE); Huysegems, Rafaël, 2800 Walem Mechelen (BE); Dequeker, Hans Maurice Felix Corneel, 3020 Herent (BE)
(74) Representative: Narmon, Gisèle Marie Thérèse

(56) References cited:
- WO-A-20/04062206
- US-A1- 2004 114 518
- DECASPER D ET AL: "ROUTER PLUGINS: A SOFTWARE ARCHITECTURE FOR NEXT-GENERATION ROUTERS" IEEE / ACM TRANSACTIONS ON NETWORKING, IEEE / ACM, NEW YORK, NY, US, vol. 8, no. 1, February 2000 (2000-02), pages 2-15, XP000924285 ISSN: 1063-6692

## Description

### Field of the Invention

The present invention generally relates to packet classification in the data path of network nodes, for instance access nodes like a Digital Subscriber Line Access Multiplexer (DSLAM), a Cable Modem Termination System (CMTS), a Digital Loop Carrier (DLC), or an Optical Fibre Aggregator, routing nodes like an edge IP router, a core IP router, a switch/router, etc. The basic function of such network nodes is to process and forward inbound data packets that arrive on an inbound port to an outbound port that takes the data packet closer to its destination. Packet or data packet in the context of this patent application means any set of bits/bytes transmitted as a group, typically having an overhead and payload section. It includes fixed length and variable length packets. The process and forwarding decision is based on packet classification results. In the packet forwarding model, packet classification is likely the most complex and intensive task of the packet processor(s) in the data path. Packet classification involves identifying the packet by inspecting several fields in the data packet overhead and payload sections, and consulting look-up databases to classify the packet: Sophisticated packet classification, as is required in current high-speed networks, include complex packet content processing operations like multi-field header lookups, significant packet content analysis and parsing operations, access control list filtering, flow identification and other related tasks on top of the conventional MAC address table and IP destination address table lookups.

### Background of the Invention

A "Method and Apparatus for managing packet flows for multiple network services" is described in WO 2004/062206 A2 with International Publication date 22 July 2004. Therein a system that facilitates managing network data traffic for multiple network services is described. During operation, the system receives flow rules for network data traffic from multiple network services, wherein the flow rules can possibly conflict. Next, the system collapses the flow rules from the multiple network services into a consistent set of flow rules in a low-level form that can be efficiently applied to a packet flow. The system subsequently installs the consistent set of flow rules into a flow enforcement device, which applies the consistent set of flow rules to a packet flow received from a high-speed network connection. In this way, the flow rules from the multiple network services can be simultaneously applied to packet flow, instead of being applied separately by each network service.

Furthermore "A Software Architecture for Next-Generation Routers" is described in XP-000924285 IEEE being published at February 2000. Therein a high-performance, modular, extended services router software architecture in the Net BSD operating system kernel is described. This architecture allows code modules, called plug-ins, to be dynamically added and configured at run time. One of the features of the design is the ability to bind different plug-ins to individual flows which allows for distinct plug-in implementations to seamlessly coexist in the same runtime environment.

The complexity of and need for efficient packet classification solutions for next generation network equipment were already identified in 2001 in a White Paper from PMC-Sierra entitled "Toward Content-Based Classification". This White Paper is published on the Internet at URL:
hftp://www.pmc-sierra.com/cgi-bin/document.pl?docnum=2002233

Section 4.3 lists examples of typical classification functions, illustrating that packet classification goes beyond simple identification of the packet through the header information. Section 5 describes the data path requirements for complex packet classification.

An overview of packet classification functionalities required in today's Internet switches and routers, as well as a comparison between various algorithms that implement the different packet classification tasks is given in the article "Data Path Processing in Fast Programmable Routers" from the author Pradipta De. This article of 18 November 2004 can be downloaded from the Internet via the URL: http://arxiv.org/pdf/cs.NI/0411070

The article suggests using single stage packet classification in the data path (e.g. a general purpose processor or ASIC serves as network processor implementing all packet processing functions). Section IV of the article mentions the possibility of pipelining which is a break-up of the packet processing tasks like parsing, classification, queuing, and management/modification of the data packets in several stages inside the network processor. The network processor might rely on different co-processors for each stage of the pipeline.

To ensure that packet classification operates at line speeds, M. Kounavis et al. suggest in their article "Directions in Packet Classification for Network Processors" a two stage classification architecture: a fast software algorithm executing a 2-dimensional match based on source and destination IP addresses contained in the packet constitutes the first stage which only involves prefix matching, and a specialized hardware acceleration unit performing an n-2 dimensional match through more general range lookup operations on other fields contained in the packet constitutes the second stage. The entire article can be read at URL:
http://www.cs.berkeley.edu/~culler/courses/cs252-s05/papers/np2.pdf

Similar to M. Kounavis et al., the Universität Paderborn hints in its publication entitled "A Packet Classification Environment: C-MENT" to a packet classification device that kicks-in multiple times on the forwarding data path. This publication is accessible through the following URL:
http://ag-kastens.uni-paderborn.de/wir/adrian/c-ment.php

An example of a commercially available packet classification solution for the data path which performs a full inspection of the IP header, followed by a deep inspection of the packet payload if required, is the Astria Service Controller 2100 from Tut Systems, advertised at:
http://tutnews.com/pdflibrary/pdf/AstriaSC-10-22.pdf

A single data path network processor, even when assisted by co-processors as suggested by Pradipta De or by dedicated SW/HW as suggested by Kounavis et al. still constitutes a single physical stage in the data path implementing all packet processing tasks. Such solutions suffer from various problems. Firstly, all processing power is available in the main data path, remains limited, and therefore restricts the packet classification tasks in complexity. For more complex classification tasks, the processing power in the main data path could in theory be increased, but this requires identification of the needs of new services in advance, and at least temporarily interrupting the service to perform an upgrade. Existing packet classification solutions in other words do not allow a smooth and easy introduction of new services.

Another article, "Programmable Network Processor Platform" from the authors J. Jessen and A. Dhir, suggest offloading computational intensive tasks like packet classification from the network processor in the data path to a dedicated microprocessor, the SearchVLIW microprocessor that forms part of the SPEEDAnalyzer lookup engine in Figure 3 of the cited article. Completely offloading the packet classification task and by-passing the data path however is inefficient, inflexible and expensive because of the hardware duplication. The article from J. Jessen and A. Dhir can be retrieved via URL:
http://www.xilinx.com/esp/networks_telecom/optical/collateral/ip_semi_case _study.pdf

The object of the invention is to disclose a network node with packet classification architecture that enables smooth upgrade of the network node in case new services require the introduction of more complex, in-depth packet classification. The invention must smoothen the transition between existing network nodes and next generation network nodes, and enable faster introduction of new services with minimum capex investment.

### Summary of the Invention

The above objectives are realized by the network node defined in claim 1, having a first stage data plane packet classifier, and an insertable second stage data plane classifier.

Indeed, by implementing the packet classification in two physically separable data path stages, i.e. a first, light classification stage installed in the main data path from initialisation of the network node onwards, and a second, later insertable classification stage for the data path to handle more service specific classification operations, gradual and modular adaptation of the packet processing to the service's needs becomes possible. The partial processing in the first stage allows using existing network nodes and exploiting the maximum processing power in the main data path thereof. Partially offloading more complex classification tasks to a second, later insertable stage, does not require advance planning and provision of expensive processing power in the main data path. The network node will be built and deployed initially as cost-effective as possible. Typically, there will be very limited free resources like memory, processing power, hardware, etc. since these will be available for implementation later through the second stage data plane classifier.

It is noted that the objectives according to the current invention are further realized through the method to deploy and operate a network defined in claim 6.

An additional, advantageous feature of the present invention is that the first stage classifier will form part of a linecard whereas the second stage classifier will form part of an insertable service blade, as defined by claim 2. Thus, in case of a DSLAM for instance, the linecards in the DSLAM will have basic, first stage packet classification intelligence, as well as connectivity to a later insertable service blade that has more advanced second stage packet classification intelligence.

Another additional advantage of the current invention is that the first stage classifier is restricted to packet classification tasks for basic services as defined by claim 3.

Such basic services are deployed initially, so the network nodes may be foreseen from the beginning with all packet classification functions required for those basic services.

As defined by claim 4, packet classification tasks for more advanced services according to the invention will be integrated in the second stage classifier.

The more advanced services are introduced later in an existing network having network nodes according to the current invention. At introduction of these services, the network nodes will be equipped with the insertable second stage data plane packet classifier. This may be done without interruption of the basic services, and with minimum capex investment for the network operator.

As indicated by claim 5, the current invention may be implemented for instance in a Digital Subscriber Line Access Multiplexer. As already indicated above, many other network nodes are suitable for taking benefit of the modular packet classification architecture according to the present invention.

### Brief Description of the Drawings

Fig. 1 illustrates a first embodiment of the network node with data plane packet classification architecture according to the present invention; and
Fig. 2 illustrates a second embodiment of the network node with data plane packet classification architecture according to the present invention.

### Detailed Description of Embodiment(s)

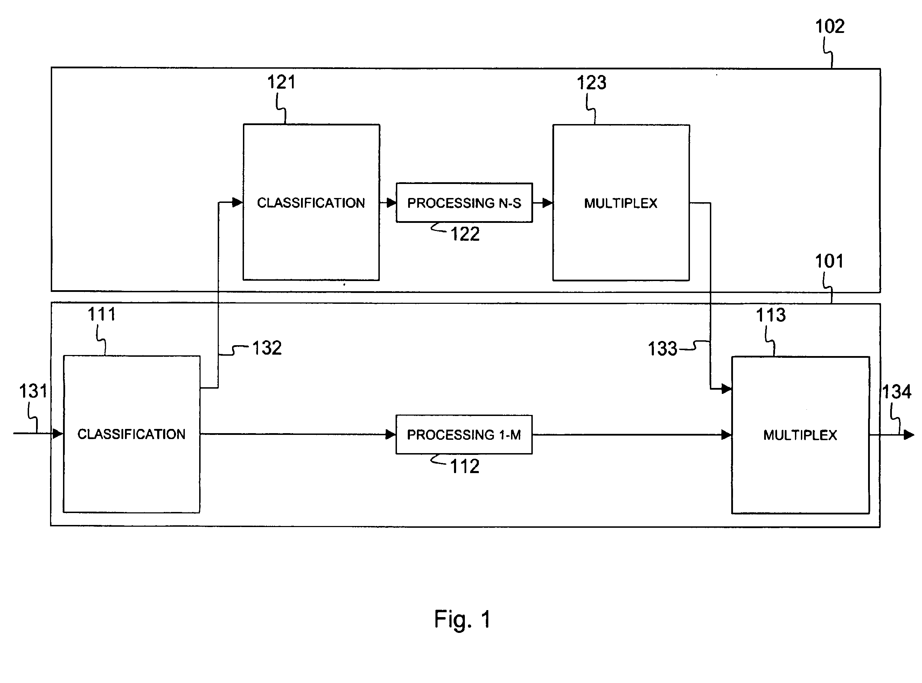

Fig. 1 shows a DSLAM with a first linecard 101 having an inbound port 131, a first stage data plane classifier 111, a first set of M packet processors 112, a first multiplexer 113, and an outbound port 134. The linecard 101 further has a slot for connectivity to an insertable service blade 102 having a second stage data plane classifier 121, a second set of packet S-N+1 processors 122, and a second multiplexer 123. The connection 132 between the first stage classifier 111 and second stage classifier 121, as well as the connection 133 between the second multiplexer 123 and the first multiplexer 113, pass through the just mentioned slot. Note that M is supposed to be an integer equal to or larger than 1, N is supposed to be equal to M+1, and S is supposed to be an integer value equal to or larger than N. One example is for instance M=1, N=2, S=2, where there is a single first stage data plane processor and a single second stage data plane processor. In the latter case however where a stage contains only one packet processor, no multiplexer is required. Thus, the multiplexers 113 and 123 are absent in the example where M=1, N=2 and S=2.

Initially, the DSLAM shown in Fig. 1 is deployed without the service blade 102, and configured to support certain basic services. All the incoming data packets arriving at port 131 are then processed in the main data path on linecard 101. This means that data packet classification is done by the first stage data plane classifier 111. Depending on the classification result, the first packet processor(s) 112 shall then process the data packets in the main data path. Although shown as a single functional block, this first packet processor(s) 112 may perform numerous different packet processing functions, referred to by PROCESSING 1-M in Fig. 1, depending on the classification result. The multiplexer 113 thereafter multiplexes the processed packets, which is the reverse operation of the classification performed in 111. The multiplexed data packet stream is forwarded through outbound port 134.

Later on, upon installation and configuration of new, more advanced services, the service blade 102 is inserted in the DSLAM. From then onwards, most of the packets may still be processed in the main data path, i.e. they are classified in the first stage classifier 111 and processed in the first packet processor 112 on the linecard 101, whereas other packets will be sent to the second stage data plane classifier 121 on the service blade 102 via connection 132 for more advanced classification tasks required in relation to the newly supported services. Depending on the classification result in the second stage data plane classifier 121, the packets will be processed by the second packet processor(s) 122. Again, although shown as a single functional block, the second packet processor(s) 122 may perform a variety of packet processing functions, PROCESSING N-S, depending on the classification result. The second multiplexer 123 performs the reverse operation of the second stage data plane classifier 121 and sends back the multiplexed packets to the linecard 101 or main data path through connection 133.

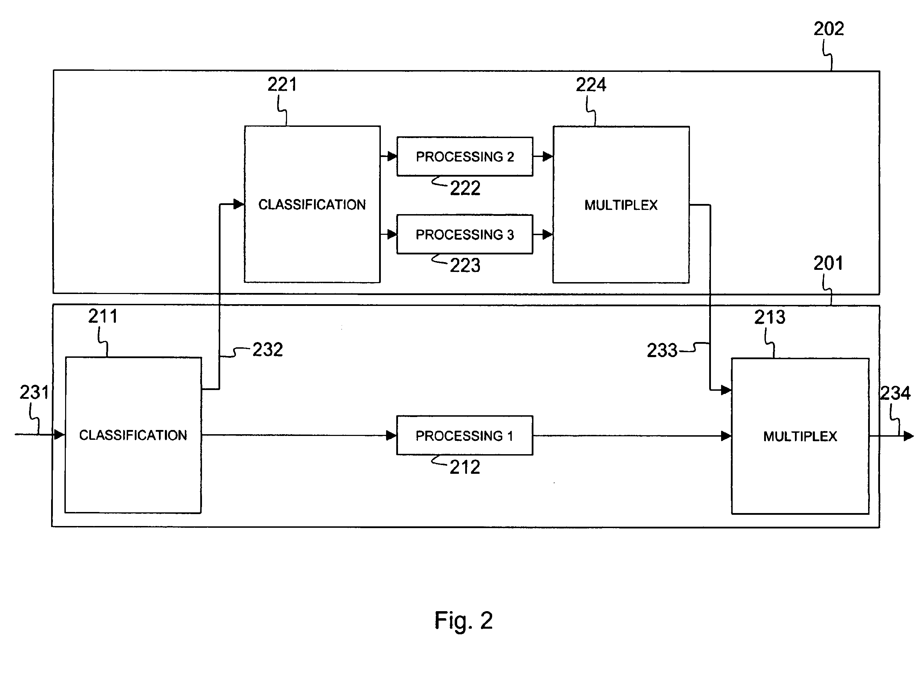

Fig. 2 shows a variant embodiment of the invention, again implemented in a DSLAM with a linecard 201 and an insertable service blade 202. In fact, Fig. 2 corresponds to a specific embodiment of the more generic scheme shown in Fig. 1, where M is chosen equal to 1, N is made 2, and S is chosen equal to 3. The linecard 201 has a first stage data plane classifier 211, a first data packet processor 212 and a multiplexer 213 in between its inbound port 231 and its outbound port 234. The insertable service blade 202 has a second stage data plane classifier 221, second and third data packet processors 222 and 223, and a second multiplexer 224. An output of the first stage data plane classifier 211 is connected to an input of the second stage data plane classifier 221 via connection 232. An output of the second multiplexer 224 is connected to an input of the first multiplexer 213 via connection 233. The connections 232 and 233 pass through slots on the linecard 201 and service blades 202 foreseen for interconnectivity there between.

The DSLAM drawn in Fig. 1 is initially also deployed without the service blade 202 in an ADSL network that is configured and operated to support basic services. For these basic services, all packet classification tasks for data packets arriving on inbound port 231 are handled by the first stage data plane packet classifier 211 in the main data path. Depending on the classification result, the data packets are then processed in the first packet processor 212. At last, the first multiplexer 213 performs the reverse operation of the first stage data plane packet classifier 211 and sources the multiplexed data packets via outbound port 234.

When the operator of the ADSL network configures his network to support more advanced services, all DSLAMs therein are equipped with an insertable service blade similar to 202 in Fig. 2, and the connection between the linecards in the DSLAMs and the respective service blade inserted therein via the foreseen slots is established. From then onwards, certain data packets arriving at inbound port 231 are still handled entirely in the main data path - they are classified in 211, forwarded e.g. through TCP port 80, processed in 212 and multiplexed in 213 - but other data packets that require more advanced packet classification are forwarded to the service blade 202 by the first stage data plane classifier 211. The forwarding of data packets on connection 232 in Fig. 2 may for instance represent sending the data packets through a UDP port on the slot between linecard 201 and service blade 202. On the service blade 202, these data packets are further classified in the second stage data plane classifier 221, and depending on the outcome of this second stage classification, the data packets will be forwarded, e.g. through port 5005, to the second packet processor 222, or e.g. through port 5003, to the third packet processor 223. After being processed in the side data path constituted by the service blade 202, the second multiplexer 224 performs the reverse action of the second stage data plane classifier 221, and sends back the data packets to the main data path, i.e. the first multiplexer 213 on the linecard 201.

Although the present invention has been illustrated by reference to specific embodiment(s), the modular packet classification architecture according to the present invention based on a first stage classifier in the main data path and a second stage classifier in an insertable side data path, might be used with same advantages in network nodes that are no DSLAMs and networks that are no ADSL networks. Also, the inbound and outbound ports represented by a single arrow in the drawings accompanying this patent application may represent a plurality of inbound ports or outbound ports respectively, and it will be the task of the multiplexers to group the data packets according to the outbound port they have to be forwarded on. The invention is not limited to any particular number or structure of data packet processing tasks. Examples have been given in Fig. 1 and Fig. 2 with respectively one or two packet processors in the side data path. Also, the multiplexers 113 and 123 shown in Fig. 1 to perform the reverse operation of the respective packet classifiers 111 and 121 are optional. The packet classification for instance might result in certain packets being processed and others not being processed. If the non-processed packets are not used further, they don't need to be multiplexed with the processed packets. Also processed packets may not need to be forwarded as a result of which the multiplexer blocks may not be required in the network node performing the packet classification and processing according to the present invention. One example is for instance the snooping of packets in the service path for legal interception. In that case, the packet classifier 111 issues a copy of the data packets forwarded to processor 112 on link 132 to the second stage classifier 121.

## Claims

1. A network node adapted to receive, process and forward data packets, said network node comprising a first stage data plane packet classifier (111) for supporting basic services, and first data plane packet processing functionality (112),
**CHARACTERIZED IN THAT** said network node is further adapted for insertion, after the first stage data plane packet classifier (111), of a second stage data plane packet classifier (121) for supporting advanced services, and a second data plane packet processing functionality (122).

2. A network node according to claim 1,
**CHARACTERIZED IN THAT** said first stage data plane packet classifier (111) forms part of a linecard (101) having a slot for connectivity with said second stage data plane packet classifier (121), and said second stage data plane packet classifier (121) forms part of a service blade (102) having a slot for connectivity with said first stage data plane packet classifier (111).

3. A network node according to claim 1,
**CHARACTERIZED IN THAT** said first stage data plane packet classifier (111) is adapted to perform data packet classification for basic services supported by said network node since initial deployment.

4. A network node according to claim 1,
**CHARACTERIZED IN THAT** said second stage data plane packet classifier (121) is adapted to perform data packet classification for advanced services supported by said network node from a time instant later than initial deployment.

5. A network node according to claim 1,
**CHARACTERIZED IN THAT** said network node is a Digital Subscriber Line Access Multiplexer, DSLAM.

6. A method to deploy and operate a network comprising one or more network nodes adapted to receive, process and forward data packets, said method comprising initial installation of said network nodes with a first stage data plane packet classifier (111), and configuring said network nodes for supporting basic services for which packet classification is handled by said first stage data plane packet classifier (111),
**CHARACTERIZED IN THAT** said method further comprises configuring at a later time instant said network nodes to support advanced services and inserting in said network nodes, after the first stage data plane packet classifier (111), a second stage data plane packet classifier (121) adapted to perform packet classification for said advanced services.

## Patentansprüche

1. Verfahren zur Optimierung der Nutzung von Netzressourcen zur Übertragung von Datenframes zwischen Netzeinheiten in einem Netzwerk (1) mit Internet-Protokoll [IP]-Unterstützung, wobei die Datenframes von Datensamples erhalten werden, die formatiert sind, und zu denen ein Datenframeheader hinzugefügt wird, wobei die Datensamples durch Codecs (5A, 5B) generiert werden, wobei die Codecs verschiedene Mund-zu-Ohr-Durchlaufzeitbudgets für die davon abgeleiteten Datenframes aufweisen,
wobei das Verfahren die Schritte umfaßt:
- Zuweisen von Codeckategorien zu jedem Datenframe gemäß dem Codec durch Mittel, von denen die Datensamples generiert werden, wobei jede Codeckategorie einem verschiedenen Mund-zu-Ohr-Durchlaufzeitbudgetbereich für die Datenframes entspricht;
- Aussortieren der Datenframes gemäß ihren Codeckategorien;
- Generieren von Multiplexzellen; und
- Transportieren der Multiplexzellen von einem Eingangsrouter (3) an einen Ausgangsrouter (4) im Netzwerk (1) mit Internet-Protokoll [IP]-Unterstützung,
***dadurch gekennzeichnet, daß*** die Multiplexzellen aus Datenframes der gleichen Codeckategorie generiert werden, *daß* jede Multiplexzelle durch Multiplexaggregation einer vorgegebenen Anzahl von Datensamples erhalten wird,
daß die vorgegebene Anzahl der Datensamples einer schmalbandigen Reservierungsanforderung zur Übertragung der Multiplexzellen entspricht,
*und* daß die vorgegebene Anzahl der Datensamples eine Funktion der Parameter wie Codeckategorie, verfügbare Ressourcen, Laufzeit, Netzlast und Netztopologie ist.

2. Das Verfahren nach Anspruch 1, **dadurch gekennzeichnet, daß** die Codeckategorie in der Funktion der Inhalte des Datenframe zugewiesen ist.

3. Das Verfahren nach Anspruch 1, **dadurch gekennzeichnet, daß** die Codeckategorie in der Funktion der Architektur des Datenframe zugewiesen ist.

4. Das Verfahren nach Anspruch 1, **dadurch gekennzeichnet, daß** Verfahren außerdem einen Schritt des Markierens jedes Datenframe gemäß der dazu zugewiesenen Codeckategorie umfaßt.

5. Das Verfahren nach Anspruch 1, **dadurch gekennzeichnet, daß** jede Multiplexzelle einen Header aufweist, und daß der Header gemäß der Codeckategorie der Datenframes markiert ist, die zur Multiplexzelle gehören.

6. Das Verfahren nach Anspruch 1, **dadurch gekennzeichnet, daß** die Datenframes Sprachframes sind, und daß die Datensamples Sprachsamples sind.

## Revendications

1. Procédé pour optimiser l'utilisation de ressources réseau pour la transmission de trames de données entre les unités de réseau (3, 4) d'un réseau (1) supportant le Protocole Internet [IP], lesdites trames de données étant obtenues à partir d'échantillons de données qui sont formatés et auxquels un en-tête de trame de données a été ajouté, les échantillons de données étant générés par des codecs (5A, 5B), lesdits codecs ayant différents budgets de retard de transmission de bouche à oreille pour les trames de données qui en dérivent,
ledit procédé comprenant les étapes consistant à :
- attribuer des catégories de codec à chacune desdites trames de données en fonction du codec au moyen duquel les échantillons de données ont été générés, chaque catégorie de codec correspondant à une plage de budgets de retard de bouche à oreille différente pour les trames de données ;
- trier les trames de données en fonction de leurs catégories de codec ;
- générer des cellules multiplexées ; et
- transporter lesdites cellules multiplexées d'un routeur d'entrée (3) vers un routeur de sortie (4) dans ledit réseau (1) supportant le Protocole Internet [IP].
***caractérisé en ce que*** les cellules multiplexées sont générées à partir de trames de données d'une même catégorie de codec,
***en ce que*** chaque cellule multiplexée est obtenue par agrégation multiplexée d'un nombre prédéterminé d'échantillons de données,
***en ce que*** ledit nombre prédéterminé d'échantillons de données correspond à une exigence de réservation de faible bande passante pour la transmission desdites cellules multiplexées,
*et **en ce que*** ledit nombre prédéterminé d'échantillons de données est une fonction de paramètres tels que ladite catégorie de codec, les ressources disponibles, le budget de retard, la charge du réseau et la topologie de réseau.

2. Procédé selon la revendication 1, **caractérisé en ce que** ladite catégorie de codec est attribuée en fonction du contenu de ladite trame de données.

3. Procédé selon la revendication 1, **caractérisé en ce que** ladite catégorie de codec est attribuée en fonction de l'architecture de ladite trame de données.

4. Procédé selon la revendication 1, **caractérisé en ce que** ledit procédé comprend également une étape consistant à marquer chaque trame de données en fonction de la catégorie de codec qui lui a été attribuée.

5. Procédé selon la revendication 1, **caractérisé en ce que** chacune desdites cellules multiplexées possède un en-tête, et **en ce que** ledit en-tête est marqué en fonction de la catégorie de codec des trames de données appartenant à ladite cellule multiplexée.

6. Procédé selon la revendication 1, **caractérisé en ce que** lesdites trames de données sont des trames vocales, et **en ce que** lesdits échantillons de données sont des échantillons vocaux.
